# FASCICULE DE BREVET EUROPEEN

(11) **EP 2 542 828 B1**
(45) Date de publication et mention de la délivrance du brevet: **05.09.2018**
(21) Numéro de dépôt: 11704972.6
(22) Date de dépôt: 18.02.2011
(51) Int. Cl.: F21S 43/145, F21S 43/00

(54) **DISPOSITIF DE SIGNALISATION D'UN VÉHICULE AUTOMOBILE COMPRENANT UNE SOURCE SURFACIQUE DE LUMIÈRE**
SIGNALISIERUNGSVORRICHTUNG FÜR EINEN MOTOR MIT EINER OBERFLÄCHENLICHTQUELLE
SIGNALING DEVICE FOR A MOTOR INCLUDING A SURFACE LIGHT SOURCE

(30) Priorité: 05.03.2010 FR 1051610
(43) Date de publication de la demande: 09.01.2013
(73) Titulaire: Valeo Vision, 93012 Bobigny Cedex (FR)
(72) Inventeur: DUBOSC, Christophe, F-93250 Villemomble (FR); ALBOU, Pierre, F-75013 Paris (FR); GODBILLON, Vincent, F-75011 Paris (FR)
(86) Numéro de dépôt international: PCT/EP2011/052394
(87) Numéro de publication internationale: WO 2011/107352

(56) Documents cités:
- EP-A1- 1 555 477
- EP-A2- 1 589 281
- WO-A1-2004/104474
- WO-A1-2005/007450
- DE-A1-102007 021 865
- FR-A1- 2 808 868
- GB-A- 2 405 755
- US-A1- 2009 262 545
- US-A1- 2009 296 370

## Description

La présente invention concerne un dispositif optique de signalisation d' véhicule automobile, ayant une fonction photométrique utile pour la circulation sur route du véhicule, permettant au véhicule d'être vu par d'autres véhicules. Dans le domaine de la signalisation, tout comme dans celui de l'éclairage, de nombreuses contraintes réglementaires laissent peu de place pour modifier l'aspect des feux à l'état allumé, puisque la photométrie des faisceaux lumineux est imposée dans une très large mesure. Cependant, le style et l'esthétique sont des données très importantes pour ce type de produit, et les constructeurs automobiles cherchent à donner une "signature" à leurs produits, pour qu'ils soient aisément identifiables par l'utilisateur final. Or, si cette "signature" est claire de jour, quand le feu ou le projecteur est éteint, il n'en est pas de même la nuit, quand ils sont allumés. En effet, de nuit, les dispositifs d'éclairage et/ou de signalisation ne sont généralement pas visibles sur toute leur surface extérieure: seules les plages éclairantes des fonctions optiques de base sont éclairées. Ainsi, un feu de signalisation est composé de plusieurs plages éclairantes correspondant aux différentes fonctions optiques à réaliser, dont des fonctions allumées en continu comme la fonction lanterne, et des fonctions allumées seulement par périodes, comme la fonction stop par exemple.

Les dispositifs d'éclairage et/ou de signalisation ont donc en fait deux aspects bien différents selon qu'ils sont allumés ou éteints. La tendance actuelle à augmenter la surface des projecteurs et des feux ne fait qu'accentuer encore cette différence. C'est tout particulièrement le cas de feux à grande surface extérieure du type feux avec "retour d'aile", c'est-à-dire des feux qui s'étendent non seulement sur la face avant ou arrière du véhicule, mais aussi sur le flanc de celui-ci au niveau de la partie de raccordement d'une aile à cette face avant ou arrière : on a dans ce cas précis souvent une forte disparité entre la surface allumée utile et la surface extérieure complète du feu.

On a donc tendance à perdre, de nuit, la "signature" des dispositifs d'éclairage et/ou de signalisation. Par ailleurs et de façon plus générale, il existe un besoin pour mieux diversifier/ajuster l'aspect des dispositifs d'éclairage et/ou de signalisation quand au moins une de leur fonction optique est allumée.

Pour remédier à ce problème, on connaît du document EP 1 434 000 un dispositif de signalisation comprenant une source de lumière assurant une fonction de signalisation et un écran recouvrant cette source de lumière. Cet écran constitue en fait un guide de lumière pour guider la lumière d'une autre source de lumière prévue sur un pourtour de l'écran jusqu'à des foyers de diffusion prévus sur l'écran pour qu'à ces endroits, la lumière générée par l'autre source de lumière puisse sortir de l'écran et être ainsi visible. Néanmoins, une telle solution pose un certain nombre de problèmes, notamment des problèmes de complexité de réalisation. En effet, il faut d'une part prévoir l'autre source de lumière et l'agencer sur le pourtour de l'écran et, d'autre part, réaliser sur l'écran un certain nombre de motifs ou de reliefs permettant à la lumière de sortir de l'écran. Ces contraintes rendent le dispositif de signalisation difficile à réaliser et coûteux. Un autre dispositif, applicable notamment à une lampe de feu arrière de véhicule, est connu de US2009/0262545. L'invention a pour but d'améliorer l'aspect des dispositifs de signalisation, et plus particulièrement de donner un aspect lumineux homogène dans toute direction d'observation, avec plus de liberté de forme, tout particulièrement quand ils sont au moins partiellement allumés, sans pour autant compliquer leur réalisation et augmenter leur coût.

Selon l'invention, le dispositif optique de signalisation d'un véhicule automobile, comprend une source principale de lumière et une source auxiliaire de lumière. La source auxiliaire de lumière comprend une source surfacique de lumière. La présence d'une source surfacique de lumière permet d'améliorer l'esthétique du dispositif de signalisation. Notamment, cette présence permet de modifier l'aspect du dispositif de signalisation lorsque celui-ci est activé.

La source principale de lumière et la source auxiliaire de lumière n'assurent pas plus d'une fonction de signalisation. Éventuellement, la source auxiliaire de lumière complète la source principale de lumière pour assurer la fonction de signalisation. De préférence, les sources principale et auxiliaire de lumière sont activées simultanément.

Selon un mode préféré de réalisation, la source principale de lumière émet des rayons lumineux et produit l'essentiel de la lumière permettant d'assurer une fonction de signalisation. De préférence, la source principale de lumière produit l'intégralité de la lumière permettant d'assurer la fonction de signalisation. La photométrie de la fonction de signalisation est donc essentiellement, voire intégralement, assurée par la source principale. La source auxiliaire de lumière émet des rayons lumineux et produit un effet allumé particulier du dispositif de signalisation. La source auxiliaire de lumière a pour fonction de réaliser la signature du dispositif, comme donner un aspect allumé particulier au dispositif. Notamment, la source auxiliaire de lumière peut permettre d'homogénéiser l'aspect du dispositif de signalisation lorsque celui-ci est allumé. De préférence, les deux sources sont allumées simultanément et sont de même couleur.

On peut également envisager des modes de réalisation où la ou les sources principales réalisent une première fonction photométrique et la ou les sources auxiliaires réalisent une deuxième fonction photométrique distincte de la première. Ces fonctions photométriques sont préférentiellement des fonctions d'éclairage et/ou de signalisation. Par exemple, la ou les sources principales peuvent réaliser une fonction de type lanterne et la ou les sources auxiliaires une fonction de type « side-marker », qui indique le gabarit du véhicule.

L'aire d'émission de la source surfacique de lumière peut être supérieure à 1 cm², voire supérieure à 10 cm².

La source surfacique de lumière comprend une diode électroluminescente organique. Cette technologie présente de nombreux avantages, évolue rapidement et son coût est en baisse. La diode électroluminescente organique peut être lambertienne.

La diode électroluminescente organique est de préférence conformable. Notamment, elle peut consister en un film déformable appliqué sur une surface d'une pièce transparente ou elle peut être imprimée sur une surface d'une pièce transparente. Ainsi, la surface de la diode électroluminescente peut être gauche.

Le dispositif de signalisation comprend de préférence un boîtier fermé par une glace de fermeture à l'intérieur duquel se trouvent les sources principale et auxiliaire.

La source auxiliaire de lumière peut être interposée entre la glace de fermeture et la source principale de lumière et la source auxiliaire de lumière peut être du type transparent. Ainsi, on obtient un aspect homogène du dispositif de signalisation. Les rayons lumineux émis par la source principale de lumière doivent traverser la source auxiliaire avant d'atteindre la glace de fermeture.

La source principale de lumière peut être interposée entre la glace de fermeture et la source auxiliaire de lumière. Ainsi, les rayons lumineux émis par la source principale de lumière peuvent atteindre directement la glace de fermeture. Les sources principale et auxiliaire présentent des aires différentes, voire très différentes. Ainsi, bien que la source principale se trouve interposée entre la source auxiliaire et la glace de fermeture, il est possible de voir la source auxiliaire se trouvant derrière la source principale.

La source auxiliaire de lumière peut présenter une découpe dans laquelle la source principale de lumière est agencée. Ainsi, de même que précédemment, les rayons lumineux émis par la source principale de lumière peuvent atteindre directement la glace de fermeture. Les sources principale et auxiliaire présentent des aires différentes, voire très différentes. Ainsi, la source auxiliaire reste visible.

La source principale de lumière peut être agencée au niveau d'un bord du dispositif de signalisation et/ou au niveau d'un bord de la source auxiliaire de lumière.

La source principale de lumière peut comprendre plusieurs éléments émettant de la lumière. Ainsi, différentes zones peuvent être constituées, ces zones émettant des rayons lumineux de couleurs différentes et/ou étant activées indépendamment les unes des autres.

La source auxiliaire de lumière peut comprendre plusieurs éléments surfaciques émettant de la lumière, notamment plusieurs diodes électroluminescentes organiques. Ainsi, différentes zones peuvent être constituées, ces zones émettant des rayons lumineux de couleurs différentes ou non et/ou étant activées indépendamment les unes des autres. Ces différentes zones peuvent permettre de suivre au plus près le galbe d'une glace de fermeture.

La source principale de lumière et la source auxiliaire de lumière peuvent être activées simultanément.

De préférence, l'essentiel d'une fonction de signalisation est assuré par la source principale.

Le dispositif est de préférence destiné à assurer une fonction de signalisation d'un véhicule automobile.

Dans un plan perpendiculaire à l'axe optique du dispositif, la somme des aires des surfaces projetées, notamment dans un plan perpendiculaire à l'axe optique du dispositif, des sources principale et auxiliaire peut être supérieure à 50 %, voire supérieure à 60 %, de l'aire de la surface d'un quadrilatère englobant ces surfaces projetées des sources principale et auxiliaire.

Préférentiellement, la distance maximum entre la source auxiliaire et la principale est de 20mm et préférentiellement 15mm. L'avantage étant d'améliorer la lisibilité de la ou des fonctions par les autres conducteurs, qui ont dans une même direction toute l'information de signalisation..

Un autre objet de l'invention est un véhicule automobile comprenant un dispositif de signalisation défini précédemment.

Le dessin annexé représente, à titre d'exemples, différents modes de réalisation d'un dispositif de signalisation pour véhicule automobile selon l'invention.
La figure 1 est un schéma de principe en coupe d'un premier mode de réalisation d'un dispositif de signalisation selon l'invention.
La figure 2 est un schéma de principe en vue de face (sans le boîtier) du premier mode de réalisation d'un dispositif de signalisation selon l'invention.
La figure 3 est un schéma de principe en coupe d'un deuxième mode de réalisation d'un dispositif de signalisation selon l'invention.
La figure 4 est un schéma de principe en vue de face (sans le boîtier) du deuxième mode de réalisation d'un dispositif de signalisation selon l'invention.
La figure 5 est un schéma de principe en coupe d'un troisième mode de réalisation d'un dispositif de signalisation selon l'invention.
La figure 6 est un schéma de principe en vue de face (sans le boîtier) du troisième mode de réalisation d'un dispositif de signalisation selon l'invention.
La figure 7 est un schéma de principe en coupe d'un quatrième mode de réalisation d'un dispositif de signalisation selon l'invention.
La figure 8 est un schéma de principe en vue de face (sans le boîtier) du quatrième mode de réalisation d'un dispositif de signalisation selon l'invention.
La figure 9 est une vue en perspective avant d'un cinquième mode de réalisation d'un dispositif de signalisation selon l'invention.
La figure 10 est une vue en perspective arrière du cinquième mode de réalisation du dispositif de signalisation selon l'invention.
La figure 11 est une vue de face du cinquième mode de réalisation du dispositif de signalisation selon l'invention.
La figure 12 est une vue en section verticale du cinquième mode de réalisation du dispositif de signalisation selon l'invention.
La figure 13 est un schéma de principe d'un mode de réalisation d'une source surfacique de lumière pouvant être utilisé pour la mise en oeuvre d'un dispositif de signalisation selon l'invention.
La figure 14 est un schéma de principe d'un mode de réalisation d'une autre source surfacique de lumière pouvant être utilisé pour la mise en oeuvre d'un dispositif de signalisation selon l'invention.

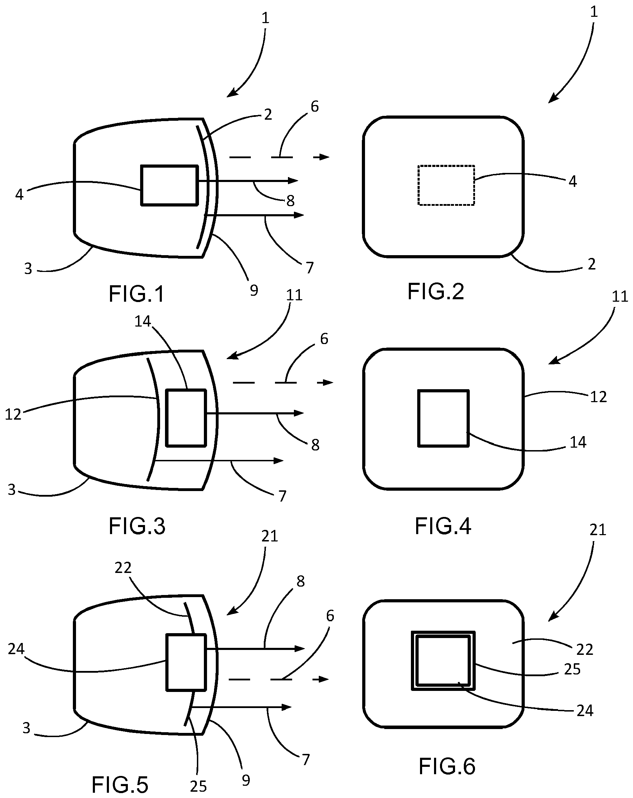

Dans un premier mode de réalisation, décrit ci-après en référence aux figures 1 et 2, le dispositif optique est un dispositif de signalisation qui comprend un boîtier 3 fermé par une glace de fermeture 9. Le dispositif de signalisation comprend au moins une source principale de lumière 4 et au moins une source auxiliaire de lumière 2. La source principale de lumière émet des rayons lumineux 8 et produit l'essentiel de la lumière permettant d'assurer une fonction de signalisation. De préférence, la source principale de lumière produit l'intégralité de la lumière permettant d'assurer la fonction de signalisation. De préférence, la source auxiliaire de lumière émet des rayons lumineux 7 et produit un effet allumé particulier du dispositif de signalisation. Notamment, la source auxiliaire de lumière peut permettre d'homogénéiser l'aspect du dispositif de signalisation lorsque celui-ci est allumé.

Dans ce premier mode de réalisation, la source auxiliaire de lumière 2 est interposée entre la glace de fermeture 9 et la source principale de lumière 4. Ainsi, les rayons lumineux 7 émis par la source auxiliaire de lumière 2 atteignent directement la glace de fermeture pour sortir du dispositif de signalisation. Cependant, les rayons lumineux 8 émis par la source principale de lumière 4 atteignent indirectement la glace de fermeture : ils doivent au préalable traverser la source auxiliaire de lumière. Aussi, dans ce premier mode de réalisation, la source auxiliaire de lumière doit être du type transparent. Elle comprend de préférence une diode électroluminescente organique ayant deux électrodes transparentes. La source principale de lumière se trouvant derrière la source auxiliaire de lumière, elle est représentée en traits pointillés à la figure 2. Il est à noter qu'une partie des rayons lumineux est absorbée lors de la traversée de la source auxiliaire de lumière. Dans ce premier mode de réalisation, la source principale de lumière est positionnée derrière la source auxiliaire relativement à la direction ou aux directions d'émission de lumière de la source auxiliaire. Le dispositif présente un axe optique 6.

Dans un deuxième mode de réalisation, décrit ci-après en référence aux figures 3 et 4, le dispositif de signalisation 11 diffère de celui décrit précédemment en ce que la source principale de lumière 14 est intercalée entre la glace de fermeture 9 et la source auxiliaire de lumière 14. Ainsi, les rayons lumineux 8 émis par la source principale de lumière 14 atteignent directement la glace de fermeture pour sortir du dispositif de signalisation. En revanche, seuls les rayons lumineux 7 émis par la source auxiliaire de lumière 12 et se trouvant autour de la source principale de lumière atteignent la glace de fermeture. Une partie des rayons lumineux 7 émis par la source auxiliaire de lumière se trouve arrêtée par la source principale de lumière. La source auxiliaire de lumière se trouvant derrière la source principale de lumière, cette dernière est représentée en traits forts à la figure 4.

Dans un troisième mode de réalisation, décrit ci-après en référence aux figures 5 et 6, le dispositif de signalisation 21 diffère de ceux décrits en référence aux figures 1 à 4 en ce que la source principale de lumière 24 est située au moins sensiblement au même niveau de la source auxiliaire de lumière 22. Notamment, la source principale peut être située dans le même plan que la source auxiliaire. Par exemple, une découpe 25 est pratiquée dans la source auxiliaire. Ainsi, la source principale peut être disposée dans la découpe. Les rayons lumineux 8 émis par la source principale de lumière 24, comme les rayons lumineux 7 émis par la source auxiliaire de lumière 22, atteignent directement la glace de fermeture pour sortir du dispositif de signalisation. La source auxiliaire 22 entoure la source principale 24. La source principale assure la photométrie de la fonction de signalisation et la source auxiliaire réalise la signature du dispositif. Cette signature est réalisée par l'allumage d'une surface entourant la source principale.

Dans deux variantes de réalisation, la source auxiliaire présente une découpe comme selon un exemple du troisième mode de réalisation, mais la source principale est en avant ou arrière de l'ouverture créée par la découpe. Par exemple, selon une première variante de réalisation, il est possible de substituer la source auxiliaire de lumière 22 du troisième mode de réalisation à la source de lumière auxiliaire 2 du premier mode de réalisation. Comparativement au premier mode de réalisation, le rendement photométrique de cette première variante sera amélioré. En effet, dans cette variante, il n'y a pas de perte de lumière émise par la source principale en traversant la source de lumière auxiliaire. Selon une deuxième variante de réalisation, il est possible de substituer la source auxiliaire de lumière 22 du troisième mode de réalisation à la source de lumière auxiliaire 12 du deuxième mode de réalisation. Dans ces deux variantes, on réduit le coût puisque la source de lumière auxiliaire présente une surface efficiente réduite, notamment si cette source de lumière auxiliaire est une OLED. De plus selon ces deux variantes, on obtient en plus un effet de profondeur.

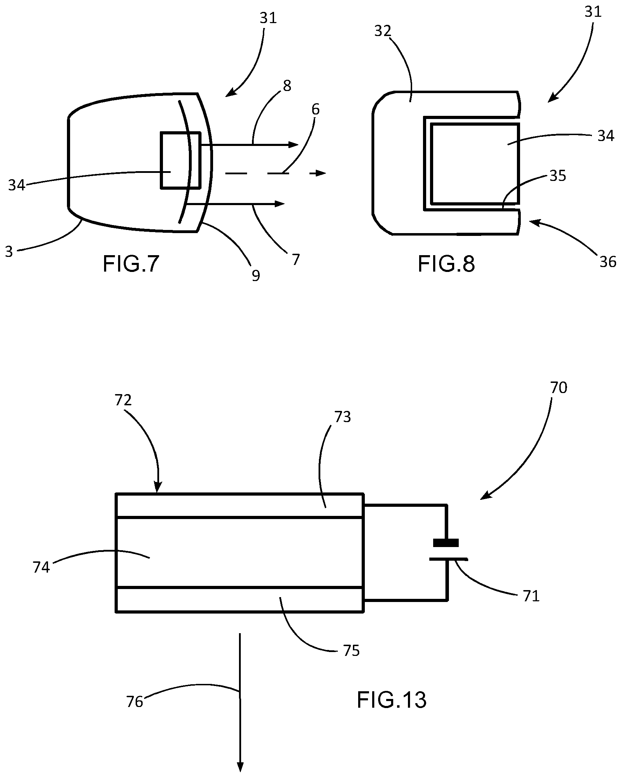

Dans un quatrième mode de réalisation, décrit ci-après en référence aux figures 7 et 8, le dispositif de signalisation 31 diffère de celui décrit en référence aux figures 5 à 6 en ce que la source principale de lumière 34 est située sur un bord 36 de la source auxiliaire de lumière 32. Une découpe 35 peut être pratiquée dans la source auxiliaire de sorte que la source principale puisse être disposée dans cette découpe. La source auxiliaire 32 entoure partiellement la source principale 34. La source principale assure la photométrie de la fonction de signalisation et la source auxiliaire réalise la signature du dispositif. Cette signature est réalisée par l'allumage d'une surface entourant partiellement la source principale.

Bien entendu, ce dernier mode de réalisation peut être combiné avec les deux premiers modes de réalisation. Ainsi, la source principale de lumière n'est pas nécessairement située au milieu ou sensiblement au milieu de la source auxiliaire de lumière, mais peut-être située au niveau d'un bord de cette dernière, que la source principale de lumière se trouve en avant, en arrière, ou au niveau de la source auxiliaire de lumière.

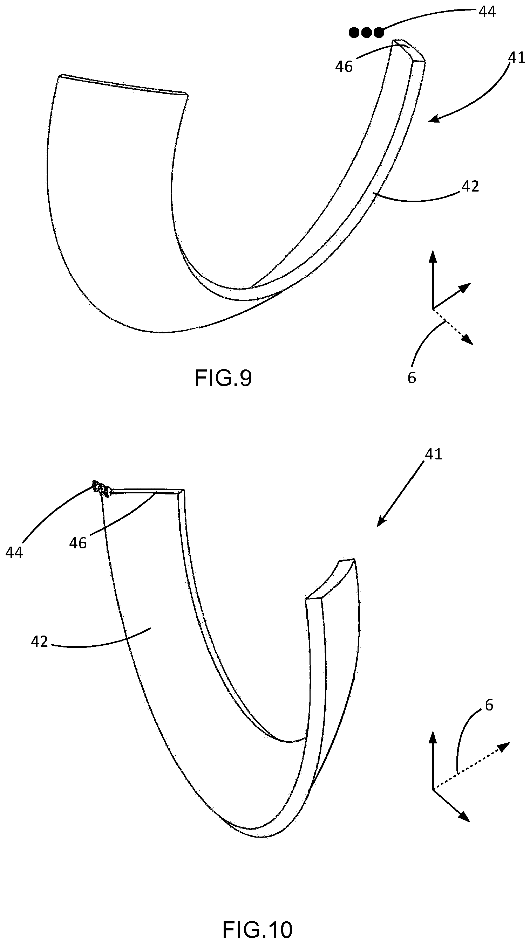

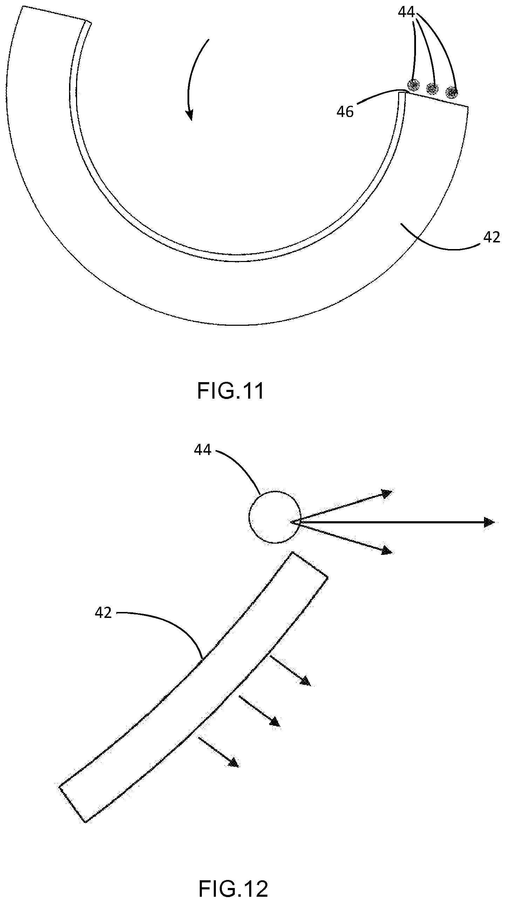

Dans un cinquième mode de réalisation, décrit ci-après en référence aux figures 9 à 12, le dispositif de signalisation 41 diffère de celui décrit en référence aux figures 7 et 8 en ce que la source principale de lumière 44 est située au niveau d'un bord 46 de la source auxiliaire de lumière 42, sans qu'une découpe ne soit pratiquée dans la source auxiliaire. La source principale de lumière comprend plusieurs diodes électroluminescentes 44 et la source auxiliaire de lumière a sensiblement la forme d'une partie de tronc de cône.

Les rayons lumineux 8 émis par la source principale de lumière et les rayons lumineux 7 émis par la source auxiliaire de lumière peuvent être émis au moins sensiblement selon la même direction. Néanmoins, ils peuvent être aussi émis selon des directions très différentes pouvant par exemple former entre elles un angle allant jusqu'à 90° ou plus. En particulier, notamment dans des applications de feux à grande surface extérieure du type feux avec "retour d'aile", les rayons lumineux 8 émis par la source principale de lumière et les rayons lumineux 7 émis par la source auxiliaire de lumière peuvent être localement émis au moins sensiblement selon la même direction et localement émis selon des directions très différentes. En effet, la fonction de signalisation est réalisée au moins essentiellement par la source principale. La source auxiliaire a une fonction de signature.

Dans les différents modes de réalisation, la source auxiliaire de lumière est de type surfacique : elle comprend au moins une source surfacique de lumière, comprenant une diode électroluminescente organique. Un tel dispositif 70 de diode électroluminescente organique est représenté à la figure 13. Le dispositif comprend une diode électroluminescente organique 72 et un générateur de tension électrique 71. La diode électroluminescente organique comprend plusieurs couches : une cathode 73, une anode 75 et une couche organique 74. Lorsque la couche organique est soumise à une tension électrique, elle émet un rayonnement lumineux 76 se propageant au travers de l'anode 75 qui est transparente relativement à ce rayonnement.

Préférentiellement, l'aire émettrice de la source surfacique de lumière est supérieure à 1 cm², voire supérieure à 10 cm².

La source auxiliaire de lumière peut comprendre plusieurs éléments surfaciques émettant de la lumière, notamment plusieurs diodes électroluminescentes organiques. Les différents éléments surfaciques de lumière peuvent être activés simultanément ou indépendamment les uns des autres. Les différents éléments peuvent être disposés jointivement ou non, éventuellement en orientant leurs plans d'émission différemment.

La source auxiliaire de lumière peut être lambertienne ou non.

De préférence, la source auxiliaire est réalisée par une diode électroluminescente organique conformable. Par exemple, elle peut être réalisée par un film qu'il est possible de déposer sur une surface, notamment sur une surface gauche. Alternativement, elle peut être réalisée grâce à une technique d'impression des différentes couches, notamment par une technique d'impression sur une surface gauche. Ainsi, la source auxiliaire de lumière peut avoir une forme permettant de suivre le galbe de la glace de fermeture 9 du dispositif de signalisation.

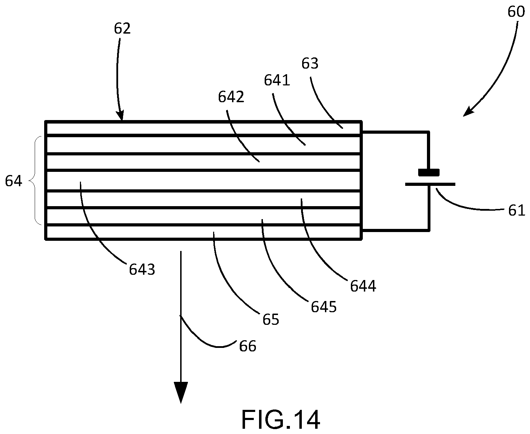

La source principale de lumière peut être de tous types. De préférence, elle comprend une ou plusieurs lampes associées à un réflecteur ou une ou plusieurs diodes électroluminescentes, ou LED, associées à un réflecteur. Elle peut aussi comprendre un système de lentilles optiques. La source principale de lumière peut comprendre une diode électroluminescente organique. Un tel dispositif 60 de diode électroluminescente organique est représenté à la figure 14. Le dispositif comprend une diode électroluminescente organique 62 et un générateur de tension électrique 61. La diode électroluminescente organique comprend plusieurs couches : une cathode 63, une anode 65 et une couche organique 64. Lorsque la couche organique est soumise à une tension électrique, elle émet un rayonnement lumineux 66 se propageant au travers de l'anode 65 qui est transparente relativement à ce rayonnement. La couche organique peut éventuellement comprendre différentes strates 641 à 645 en matériaux organiques différents. De préférence, on utilise des diodes électroluminescentes organiques comprenant des strates supplémentaires. En plus de la strate 643 émettrice de lumière, la couche organique comprend une strate 641 favorisant le transport des électrons jusqu'à la strate émettrice 643 et une strate 645 favorisant le transport des trous jusqu'à la strate émettrice 643. La couche organique peut aussi comprendre une strate 642 bloquant les trous provenant des strates inférieures (643 à 645) et une strate 644 bloquant les électrons provenant des strates supérieures (641 à 643). L'ensemble de ces strates constitue une microcavité dont l'épaisseur est ajustée pour créer une résonance optique. Ainsi, on réalise des réflecteurs interférentiels sélectifs qui constituent des cavités résonnantes. Par exemple, on peut utiliser une diode électroluminescente organique du type décrit dans le document FR 2 926 677.

Selon des modes de réalisations, il est possible de prévoir que les sources principale et auxiliaire de lumière émettent de la lumière de couleurs différentes, les fonctions assurées par les deux sources pouvant nécessiter des couleurs différentes.

Selon un mode de réalisation préféré, les sources principale et auxiliaire de lumière sont activées simultanément.

La source principale de lumière et la source auxiliaire de lumière n'assurent pas plus d'une fonction de signalisation. La source auxiliaire de lumière complète la source principale de lumière pour assurer la fonction de signalisation.

Dans le cas où la source auxiliaire de lumière est réalisée par plusieurs éléments surfaciques émettant de la lumière, il est possible de réaliser plusieurs zones pouvant être allumées indépendamment les unes des autres. Il est également possible d'éteindre une zone lorsque la source principale est allumée.

Le dispositif de signalisation selon l'invention permet par exemple d'assurer l'une des fonctions suivantes : signalisation de position du véhicule, signalisation de changement de direction, signalisation de recul, signalisation de freinage, signalisation en cas de brouillard.

## Revendications

1. Dispositif optique (1 ; 11 ; 21 ; 31 ; 41) de signalisation d'un véhicule automobile, comprenant une source principale de lumière (4 ; 14 ; 24 ; 34 ; 44) et une source auxiliaire de lumière (2 ; 12 ; 22 ; 32 ; 42), la source auxiliaire de lumière comprenant une source surfacique de lumière comprenant une diode électroluminescente organique (2 ; 12 ; 22 ; 32 ; 42), **caractérisé en ce que** la source principale de lumière et la source auxiliaire de lumière n'assurent pas plus d'une fonction de signalisation, la fonction de signalisation étant une fonction photométrique utile pour la circulation sur route du véhicule, permettant au véhicule d'être vu par d'autres véhicules.

2. Dispositif selon la revendication précédente, **caractérisé en ce que** l'aire d'émission de la source surfacique de lumière est supérieure à 1 cm², voire supérieure à 10 cm².

3. Dispositif selon l'une des revendications précédentes, **caractérisé en ce que** la diode électroluminescente organique (2 ; 12 ; 22 ; 32 ; 42) est conformable.

4. Dispositif selon l'une des revendications précédentes, **caractérisé en ce que** le dispositif de signalisation comprend un boîtier (3) fermé par une glace de fermeture (9) à l'intérieur duquel se trouvent les sources principale et auxiliaire.

5. Dispositif selon la revendication précédente, **caractérisé en ce que** la source auxiliaire de lumière (2) se trouve interposée entre la glace de fermeture et la source principale de lumière (4) et **en ce que** la source auxiliaire de lumière (2) est du type transparent.

6. Dispositif (11) selon la revendication 4, **caractérisé en ce que** la source principale de lumière (12) se trouve disposée entre la glace de fermeture et la source auxiliaire de lumière (14).

7. Dispositif (21 ; 31) selon l'une des revendications 1 à 4, **caractérisé en ce que** la source auxiliaire de lumière (22 ; 32) présente une découpe (25 ; 35) dans laquelle la source principale de lumière (24 ; 34) est agencée.

8. Dispositif selon l'une des revendications précédentes, **caractérisé en ce que** la source principale de lumière (34) est agencée au niveau d'un bord du dispositif de signalisation et/ou au niveau d'un bord (36) de la source auxiliaire de lumière.

9. Dispositif selon l'une des revendications précédentes, **caractérisé en ce que** la source principale de lumière comprend plusieurs éléments émettant de la lumière.

10. Dispositif selon l'une des revendications précédentes, **caractérisé en ce que** la source auxiliaire de lumière comprend plusieurs éléments surfaciques émettant de la lumière, notamment plusieurs diodes électroluminescentes organiques.

11. Dispositif selon l'une des revendications précédentes, **caractérisé en ce que** la source principale de lumière et la source auxiliaire de lumière sont activées simultanément.

12. Dispositif selon l'une des revendications précédentes, **caractérisé en ce que** l'essentiel de la fonction de signalisation est assuré par la source principale.

13. Dispositif selon l'une des revendications précédentes, **caractérisé en ce qu'**il est destiné à assurer une fonction de signalisation d'un véhicule automobile.

## Patentansprüche

1. Optische Signalisierungsvorrichtung (1; 11; 21; 31 41) eines Kraftfahrzeugs, umfassend eine Hauptlichtquelle (4; 14; 24; 34; 44) und eine Hilfslichtquelle (2; 12; 22; 32; 42), wobei die Hilfslichtquelle eine Oberflächenlichtquelle umfasst, die eine organische Leuchtdiode (2; 12; 22; 32; 42) umfasst, **dadurch gekennzeichnet, dass** die Hauptlichtquelle und die Hilfslichtquelle nicht mehr als eine Signalisierungsfunktion ausüben, wobei die Signalisierungsfunktion eine sinnvolle fotometrische Funktion für den Einsatz des Fahrzeugs im Straßenverkehr ist, die es dem Fahrzeug ermöglicht, von anderen Fahrzeugen gesehen zu werden.

2. Vorrichtung nach dem vorhergehenden Anspruch, **dadurch gekennzeichnet, dass** die Abstrahlungsfläche der Oberflächenlichtquelle größer ist als 1 cm², sogar größer als 10 cm² ist.

3. Vorrichtung nach einem der vorhergehenden Ansprüche, **dadurch gekennzeichnet, dass** die organische Leuchtdiode (2; 12; 22; 32; 42) nachgiebig ist.

4. Vorrichtung nach einem der vorhergehenden Ansprüche, **dadurch gekennzeichnet, dass** die Signalisierungsvorrichtung ein Gehäuse (3) umfasst, das durch eine Verschlussscheibe (9) geschlossen ist und in dessen Inneren sich die Haupt- und die Hilfslichtquelle befinden.

5. Vorrichtung nach dem vorhergehenden Anspruch, **dadurch gekennzeichnet, dass** sich die Hilfslichtquelle (2) zwischen der Verschlussscheibe und der Hauptlichtquelle (4) angeordnet befindet und dass die Hilfslichtquelle (2) vom transparenten Typ ist.

6. Vorrichtung (11) nach Anspruch 4, **dadurch gekennzeichnet, dass** sich die Hauptlichtquelle (12) zwischen der Verschlussscheibe und der Hilfslichtquelle (14) angeordnet befindet.

7. Vorrichtung (21; 31) nach einem der Ansprüche 1 bis 4, **dadurch gekennzeichnet, dass** die Hilfslichtquelle (22; 32) einen Ausschnitt (25; 35) aufweist, in dem die Hauptlichtquelle (24; 34) angeordnet ist.

8. Vorrichtung nach einem der vorhergehenden Ansprüche, **dadurch gekennzeichnet, dass** die Hauptlichtquelle (34) auf der Ebene eines Randes der Signalisierungsvorrichtung und/oder auf der Ebene eines Randes (36) der Hilfslichtquelle angeordnet ist.

9. Vorrichtung nach einem der vorhergehenden Ansprüche, **dadurch gekennzeichnet, dass** die Hauptlichtquelle mehrere Licht abstrahlende Elemente umfasst.

10. Vorrichtung nach einem der vorhergehenden Ansprüche, **dadurch gekennzeichnet, dass** die Hilfslichtquelle mehrere Licht abstrahlende Oberflächenelemente umfasst, insbesondere mehrere organische Leuchtdioden.

11. Vorrichtung nach einem der vorhergehenden Ansprüche, **dadurch gekennzeichnet, dass** die Hauptlichtquelle und die Hilfslichtquelle gleichzeitig aktiviert werden.

12. Vorrichtung nach einem der vorhergehenden Ansprüche, **dadurch gekennzeichnet, dass** das Wesentliche der Signalisierungsfunktion durch die Hauptlichtquelle erfolgt.

13. Vorrichtung nach einem der vorhergehenden Ansprüche, **dadurch gekennzeichnet, dass** sie dazu vorgesehen ist, eine Signalisierungsfunktion eines Kraftfahrzeugs auszuüben.

## Claims

1. Optical signalling device (1; 11; 21; 31; 41) for a motor-vehicle, comprising a main light source (4; 14; 24; 34; 44) and an auxiliary light source (2; 12; 22; 32; 42), the auxiliary light source comprising an areal light source comprising an organic light-emitting diode (2; 12; 22; 32; 42), **characterized in that** the main light source and the auxiliary light source provide no more than one signalling function, the signalling function being a photometric function that is useful to the vehicle when it is being driven on-road, and that allows the vehicle to be seen by other vehicles.

2. Device according to the preceding claim, **characterized in that** the emission area of the areal light source is larger than 1 cm², or even larger than 10 cm².

3. Device according to one of the preceding claims, **characterized in that** the organic light-emitting diode (2; 12; 22; 32; 42) is conformable.

4. Device according to one of the preceding claims, **characterized in that** the signalling device comprises a casing (3) that is closed by a closing outer lens (9), inside of which casing the auxiliary and main light sources are located.

5. Device according to the preceding claim, **characterized in that** the auxiliary light source (2) is located interposed between the closing outer lens and the main light source (4) and **in that** the auxiliary light source (2) is of transparent type.

6. Device (11) according to Claim 4, **characterized in that** the main light source (12) is located placed between the closing outer lens and the auxiliary light source (14).

7. Device (21; 31) according to one of Claims 1 to 4, **characterized in that** the auxiliary light source (22; 32) contains a notch (25; 35) in which the main light source (24; 34) is arranged.

8. Device according to one of the preceding claims, **characterized in that** the main light source (34) is arranged level with an edge of the signalling device and/or level with an edge (36) of the auxiliary light source.

9. Device according to one of the preceding claims, **characterized in that** the main light source comprises a plurality of light-emitting elements.

10. Device according to one of the preceding claims, **characterized in that** the auxiliary light source comprises a plurality of areal light-emitting elements, in particular a plurality of organic light-emitting diodes.

11. Device according to one of the preceding claims, **characterized in that** the main light source and the auxiliary light source are activated simultaneously.

12. Device according to one of the preceding claims, **characterized in that** most of the signalling function is provided by the main source.

13. Device according to one of the preceding claims, **characterized in that** it is intended to provide a signalling function of a motor vehicle.
